# EUROPEAN PATENT APPLICATION

(11) **EP 4 249 614 A1**
(43) Date of publication of application: **27.09.2023**
(21) Application number: 22211460.5
(22) Date of filing: 05.12.2022
(51) Int. Cl.: C22B 3/00, C22B 3/24, C22B 3/42, C22B 11/00

(54) **A METHOD OF RECOVERING PT,PD,RH,AU FROM HIGHLY DILUTED AQUEOUS SOLUTIONS AND A SYSTEM FOR RECOVERING PT,PD,RH,AU FROM HIGLY DILUTED AQUEOUS SOLUTIONS**

(30) Priority: 25.03.2022 PL 44075722
(71) Applicant: Akademia Gorniczo-Hutnicza im. Stanislawa Staszica w Krakowie, 30-059 Krakow (PL)
(72) Inventor: WOJNICKI, Marek, 30-128 Krakow,ul. Przybyszewskiego 64k/2 (PL); KOLCZYK-SIEDLECKA, Karolina, 31-235 Krakow,ul.Stefana Banacha 49/28 (PL); KOWALIK, Remigiusz, 30-085 Krakow,ul.Glowackiego 10A/70 (PL); ZABINSKI, Piotr, 30-124 Krakow,ul.Zelechowskiego 4/8 (PL)
(74) Representative: Kowal, Elzbieta

(57) **Abstract**

The method of recovering Pt, Pd, Rh, Au from a highly diluted waste aqueous solution containing up to 100 mg/dm³ of the precious metals Pt, Pd, Rh, Au is that the waste aqueous solution at a temperature of 19-40°C, after establishing its pH>1, is introduced continuously at a rate of 0.5 - 50000 ml/min into an activated carbon bed placed in a sorption column, located inside a microwave reactor, and heated by microwave radiation until the solution temperature reaches 200-240°C. The frequency of microwave radiation is 1-3000 GHz, while the power of the microwave reactor is 200-100000 W. At the same time, the pressure inside the column is continuously measured and maintained in the range of 4-50 bar, and the content of precious metals in the output solution remaining after the process is monitored. Advantageously, the process is carried out until the carbon is completely saturated with precious metals. The invention also relates to a system for recovering Pt, Pd, Rh, Au from a highly diluted waste aqueous solution, in which an input tank (1) is connected to a high-pressure pump (2), behind which a heat exchanger (3) is located, which is connected on one side to a sorption column (4), in the form of a tube filled with a solid bed of activated carbon, located inside a microwave reactor (5), and on the other side to a backpressure regulator (6), behind which is located an output tank (7). All components of the system are connected to a central unit (8), in which process parameters are controlled.

## Description

The object of the invention is a method of recovering Pt, Pd, Rh, Au from highly diluted aqueous solutions, which can find application for the recovery of metals in plants processing electrolytes with low precious metal content. The invention also relates to a system for recovering Pt, Pd, Rh, Au from highly diluted aqueous solutions.

Many industrial plants generate waste containing precious metals, such as smelters and metal recycling plants from waste electrical and electronic equipment, mints, catalytic gauze processing plants. The recovery of precious metals, i.e. gold, platinum and palladium, is important not only for economic but also for environmental reasons. It is known that compounds of these metals exhibit toxic and, in some cases, mutagenic properties. Therefore, processes for recovering these metals must be carried out with special care for the environment. From the point of view of the cost-effectiveness of the process carried out, the recovery should be carried out in the cheapest possible way allowing high efficiency with low expenditures of both energy and materials. In addition, the resulting waste should be able to be disposed of in an equally simple and safe manner.

A method of recovering gold from waste materials is known from patent description PL237876 B1, which consists in subjecting the shredded waste to acid leaching in the presence of chloride and/or sulfate and/or nitrate ions. Then, after filtration, the resulting multicomponent acidic aqueous solution with pH ≤ 5 is treated with activated carbon. In turn, after reaching an equilibrium state of adsorption of Cu, Ni, Fe, Sn, Pb, Zn ions and reducing the concentration of gold (III) ions, the solution is filtered. The obtained adsorbent is washed with concentrated inorganic acid with a concentration of at least 0.1% obtaining gold in metallic form on its surface.

A method of recovering metallic gold from aqueous solutions containing chloride ions is known from patent description PL232939 B1. The process of reduction of the metal ion takes place on the surface of semiconductors with the general formula M'M "O₄ where M'= Bi, Y, In, Pb, Cd; M" = V, Mo, W, Cr and their solid solutions and mixtures. The method involves adsorption of gold complex ions on the semiconductor surface and reduction of the gold ion by an excited electron to the conduction band as a result of absorption of natural and/or artificial light and their removal from the solution together with the semiconductor by filtration, where the resulting filter precipitate containing metallic gold and semiconductor is selectively separated by dissolution of the semiconductor with mineral acid.

Patent description PL228374 B1 discloses a process for the separation of platinum, palladium and gold from aqueous chloride solutions, which is characterised by using the effect of adsorption of ions of these noble metals from chloride aqueous solutions on activated carbon with the simultaneous reduction of some of them involving the formation of a metal solid phase on the carbon surface. The rates of the various steps in these processes depend on the temperature of the solution, the initial concentration of the metal ions, the amount of activated carbon added, the stirring rate and the pH of the solution.

A method known from patent description PL234892 B1 for separating platinum and palladium from aqueous solutions containing chloride ions consist in introducing into an aqueous solution containing chloride ions and Pt (IV) and Pd (II) ions, an alcohol containing 1 to 4 carbon atoms, in an amount ensuring at least twice the excess with respect to the concentration of Pt (IV) ions. The mixture is then subjected to a photochemical reaction by irradiation with radiation in the wavelength range 190 - 900 nm, after which the solution is filtered to obtain metallic platinum and the filtrate, containing palladium (II) ions.

Methods for separating platinum from palladium, based on the use of the difference in the product of solubilities of their ammonium salts, are known from the publication by R. Gilchrist and E. Wichers entitled. "A Procedure for the Separation of the Six Platinum Metals from One Another and for tir Gravimetric Determination 1,2", Journal of the American Chemical Society, 1935, 57(12): p. 2565-2573,. However, this process generates waste that still contains about 5g/L of these salts. Such technology is currently used, for example, at the Mint of Precious Metals (Radzymin, Poland), where during the recovery of residual metals in solution, i.e. Pt, Pd and insignificant amounts of Au, the company still records substantial losses of precious metals.

In precious metal recovery processes, the purity of the metals is important, which
has a key impact on their price. However, sometimes, for economic reasons, it is more advantageous and important to recover and sell the mixture of metals itself
without their further separation. Most often, the purification processes are complex and
multi-stage . While many such technologies have now been developed, however the recovering precious metals from highly diluted aqueous solutions remains a technological challenge.

Methods for the recovery of precious metals by means of pyrometallurgical processes are known, i.a. from the publication by M. Chen et al., entitled: Recovery of Precious Metals (Au, Ag, Pt, and Pd) from Urban Mining Through Copper Smelting, Metallurgical and Materials Transactions B, 2020. 51(4): p. 1495-1508, where solutions are described that allow the simultaneous recovery of Pt, Pd, Rh, Au from highly dispersed sources. The authors of this paper analysed the distribution of precious metals in equilibrium between copper matte and three different slags containing precious metals. The samples were melted in a furnace at

1300°C in a controlled gas atmosphere, then cooled at a high speed. It was found that after the process the noble metals were transferred to the metallic phase metallic phase and copper alloys containing these metals were obtained.

Pyrometallurgical methods are very energy-intensive as they are based on the use of liquid copper as a collector of precious metals. An alternative to pyrometallurgical processes are hydrometallurgical processes, based on the recovery of metals from aqueous solutions, which include extraction, adsorption, selective precipitation or electrochemical deposition. For example, there are known methods based on extraction, which are described, for example, in the publication by V.T. Nguyen et al., entitled: Separation of precious metals by split-anion extraction using water-saturated ionic liquids, Green Chemistry, 2020, 22(23): p. 8375-8388, which are also highly energy intensive. In addition, the reagents typically used for extraction
show high toxicity. From a practical point of view, this means the need for additional safety systems to eliminate contamination with toxic organic compounds.

It is known from the publication by M. Wojnicki et al. titled. "Kinetic studies of sorption and reduction of gold(III) chloride complex ions on activated carbon Norit ROX 0.8", Journal of Industrial and Engineering Chemistry, Vol. 29, (2015), pp. 289-297, how to recover trace amounts of gold ions by adsorption of gold(III) chloride complexes on activated carbon. Activated carbon is used as an adsorbent in many processes, including the recovery of precious metals. In another publication: M. Wojnicki et al, titled. "Batch reactor vs. flow column - mechanistic investigation and modeling of Au(III) ions adsorption from aqueous solutions containing Ni2+, Na+, Cl- and ClO4- as impurities," Sustainable Materials and Technologies, Vol. 23, (2020), the adsorption process in a flow column is described. The study used a column with a diameter of 7.2 mm and a total volume of 1,458 cm³, which was filled with activated carbon, and the flow rate was 1200 mL/h. The study further analyzed the effect of the amount of carbon on the adsorption of Au(III) ions.

Methods of metal recovery, realized continuously in flow reactors, based on ion-exchange extraction are also known. For example, a publication by Sami Virolainen, Ilkka Suppula, Tuomo Saini titled: Continuous ion exchange for hydrometallurgy: Purification of Ag(I)-NaCl from divalent metals with aminomethylphosphonic resin using counter-current and cross-current operation, Hydrometallurgy142 (2014) 84-93, purified silver ion solution from metals such as magnesium, zinc, calcium, lead. The measurement system consisted of eight columns containing ion exchange resins and a flow controller, the solutions were degassed before the measurements. After each experiment, the columns were flushed with eluent to regenerate the resins.

Previously used solutions for the simultaneous recovery of ions of several metals, require the use of complex flow systems based on ion exchange resins, which significantly increases costs and complicates the process. In addition, known methods usually allow recovery of only about 99% of the metal in the first stage, while the resulting washings and waste streams are disposed of. As a result, significant losses of precious metals are recorded. As FORBES reports described at https://www.forbes.pl/biznes/srebro-i-zloto-w-szwaicarskich-sciekach-iest-warte-milionv/Sf231p2, gold and silver can be found in Swiss wastewater, researchers have found. According to estimates, this amounts to as much as 43 kilograms of gold and nearly 3 tons of silver annually.

The purpose of the invention is to develop a method for the simultaneous recovery of the precious metals Pt, Pd, Rh, Au from highly diluted aqueous solutions and a system for reducing losses of these metals, with high efficiency, at a low investment and operating cost.

The essence of the method of recovering Pt, Pd, Rh, Au from highly diluted waste aqueous solution containing up to 100 mg/dm³ of precious metals Pt, Pd, Rh, Au, in which the waste aqueous solution is passed through a bed of activated carbon, and the adsorbed ions of precious metals are recovered from the surface of the activated carbon by known methods, especially by burning the carbon or dissolving the precious metals with a mixture of highly oxidizing acids, while the remaining output solution after the process is subjected to neutralization processes, is characterized by the fact that, the waste aqueous solution at a temperature of 19-40°C, after determining its pH>1, is introduced continuously at a rate of 0.5 - 50000 ml/min into a bed of activated carbon placed in a sorption column, located inside a microwave reactor and heated by microwave radiation until the temperature of the solution reaches 200-240°C. The frequency of microwave radiation is 1-3000 GHz, while the power of the microwave reactor is 200-100000 W. At the same time, the pressure inside the column is continuously measured and maintained in the range of 4-50 bar, and the content of precious metals in the remaining output solution after the process is monitored.

Advantageously, the process is carried out until the activated carbon is completely saturated with precious metals.

Advantageously, the reaction of the waste aqueous solution pH= 7 is established.

Advantageously, the frequency of microwave radiation is 2.45 GHz.

The essence of a system for recovering Pt, Pd, Rh, Au from a highly diluted waste aqueous solution, comprising an input tank of the waste aqueous solution, a high-pressure pump, an output container of the solution remaining after the process and a central unit for collecting information on process parameters and their regulation, is characterized by the fact that the input tank is connected to a high-pressure pump, behind which is located a heat exchanger, which is connected on one side to the sorption column in the form of a tube filled with a solid bed of activated carbon, located inside the microwave reactor, and on the other side to the backpressure regulator, behind which is located the output tank. All components of the system are connected to the central unit, in which process parameters are controlled.

The method and system for recovering Pt, Pd, Rh, Au from highly diluted aqueous solutions is characterized by high efficiency and higher productivity, even above 99.9%, compared to known solutions, while at the same time the cost of the sorption materials used is low. Since it is a continuous process, it can be carried out without technological interruptions, advantageously until the column is completely saturated. The time of column saturation depends, among other things, on the concentration of precious metal ions in the electrolyte and occurs when at least 10% by weight of precious metals relative to the weight of the adsorbent is adsorbed. For this reason, the noble metal content of the output solution remaining after the process is monitored.

Additional benefits of using activated carbon as an adsorbent, are economic and environmental factors. Namely, this material can be obtained from organic waste materials such as fruit stones, making it characterized by a lack of toxicity and inexpensive.

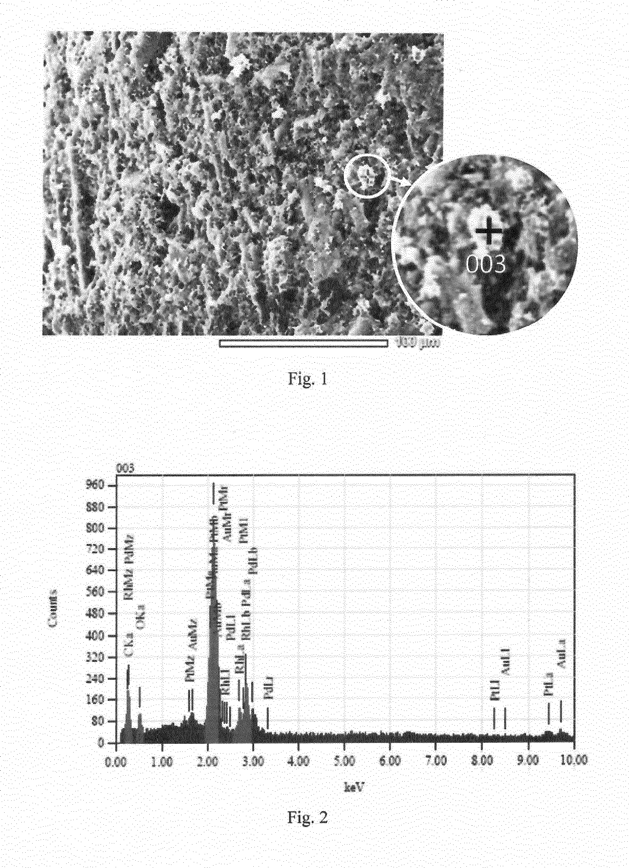

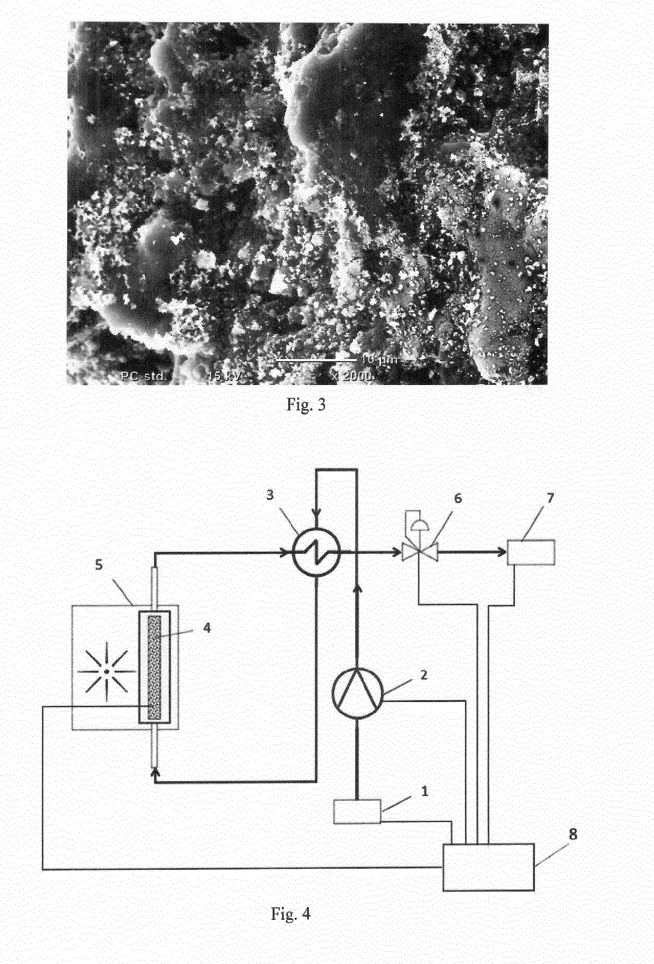

The method and system for recovering Pt, Pd, Rh, Au from highly diluted aqueous solutions, according to the invention, is explained below in practical embodiment examples and in the drawing, in which fig. 1 shows a microscopic image of the carbon surface obtained after the process described in example 1, while fig. 2 shows EDS analysis of the "003" point marked in fig. 1, fig. 3 a microscopic image of the carbon surface after the process described in example 2, and fig. 4 a schematic of the system for recovering Pt, Pd, Rh, Au from highly diluted aqueous solutions.

### Example 1

For the recovery of Pt, Pd, Rh, Au, a solution with the following concentrations of precious metals was used: 5.556 mg/dm³ Pt, 7.775 mg/dm³ Au, 5.395 mg/dm³ Pd and 3.425 mg/dm³ Rh. The pH reaction of the solution was 7, and the initial temperature was 20°C. The solution in the amount of 25 ml was introduced continuously at a rate of 1 ml/min into a sorption column, placed in a microwave reactor with a maximum power of 1000 W. The sorption column contained a bed of activated carbon of 0.08 g. Once the solution was in contact with the carbon bed, the microwave reactor was turned on. The system was heated by microwave radiation at 2.45 GHz. The temperature of the solution rose to 230°C due to the presence of activated carbon, which was rapidly heated by the microwave radiation. While the electrolyte was being introduced, the pressure inside the column was continuously measured and maintained at 40 bar to prevent the electrolyte from boiling inside the sorption column and to prevent rapid expansion of the vapor at the exit of the system. The precious metal content of the residual output solution after the process was monitored. The process was terminated after a time of 25 minutes.

The composition of the waste aqueous solution after the process was as follows: <0.05 mg/dm³ Pt, <0.05 mg/dm³ Au, <0.05 mg/dm³ Pd and <0.05 mg/dm³ Rh. The recovery of all metals exceeded 99.9%, and the concentrations of precious metals after the process were below the quantification threshold for the analyzer used (MP-AES 4200 emission spectrometer).

Fig. 1 shows a microscopic image of the carbon surface after the adsorption process and the reduction of metal ions on its surface. Bright spots can be seen, which consist of metals that were part of the waste solution before the process. In order to confirm the composition of these precipitates, EDS analyses were performed. Fig. 2 shows the EDS analysis of point "003" marked in fig. 1. This analysis made it possible to determine the following elemental composition of the material after the adsorption process: C - 14.23 wt. %, O - 6.41 wt. %, Rh - 6.27 wt. %, Pd - 12.09 wt. %, Pt - 16.33 wt. %, Au - 42.67 wt. %. The obtained results clearly prove the high efficiency of the adsorption process in the presence of microwaves.

Precious metal ions adsorbed on the surface of the activated carbon were recovered by burning it, and the solution remaining after the method was subjected to neutralization processes.

### Example 2

A solution with the following metal concentrations was used for the recovery of Pt, Pd, Rh, Au: 6.50 mg/dm³ Pt, 7.06 mg/dm³ Au, 5.64 mg/dm³ Pd and 3.39 mg/dm³ Rh. The pH of the solution was 7, and the initial temperature was 20°C. The solution in the amount of 50 ml was introduced continuously at a rate of 1 ml/min into a sorption column, placed in a microwave reactor with a maximum power of 1000 W. The sorption column contained a bed of activated carbon of 0.02 g. Once the carbon substrate was in contact with the solution, the microwave reactor was turned on. The system was heated by microwave radiation at 2.45 GHz. The temperature of the solution rose to 240°C due to the presence of activated carbon, which is rapidly heated by microwave radiation. During the introduction of the electrolyte, the pressure inside the column was measured continuously and kept at 40 bar to prevent the electrolyte from boiling inside the sorption column and to prevent rapid expansion of the vapor at the exit of the system. The process was carried out for 50 minutes, until the activated carbon was completely saturated with precious metals.

The composition of the waste aqueous solution after the process was as follows: 2.95 mg/dm³ Pt, 0.18 mg/dm³ Au, 2.77 mg/dm³ Pd and 2.68 mg/dm³ Rh. Depending on the metal, the recoveries were respectively: 54.61% for Pt, 97.45% for Au, 50.89% for Pd, 20.47% for Rh.

Fig. 3 shows an SEM photo of activated carbon after the adsorption process in the column. Small crystalline separations of metallic and alloy nature can be seen.

The precious metal ions adsorbed on the surface of the activated carbon were recovered by leaching in aqua regia (nitro-hydrochloric acid), and the solution remaining after the method was subjected to neutralization processes.

### Example 3

The system for recovering Pt, Pd, Rh, Au from highly diluted aqueous solutions includes an input tank 1 of the waste aqueous solution, which is connected to a high-pressure pump 2, behind which is located a heat exchanger 3. On one side, the heat exchanger 3 is connected to a sorption column 4 in the form of a tube made of Teflon, with an inner diameter of 0.3 cm and a length of 3 cm, and on the other side to a backpressure regulator 6, behind which is located an output tank 7. The sorption column 4 is filled with a solid bed of activated carbon in the form of fine powder and placed inside the microwave reactor 5. All components of the system are connected to the central unit 8, where process parameters such as temperature, pressure, concentration of precious metals in solution are controlled.

The input tank 1 contains the waste aqueous solution designated to the precious metals recovery process, which is pumped into the system using a high-pressure pump 2. The solution flows through a heat exchanger 3 and then through a sorption column 4. During flowing through the sorption column 4, the solution is heated by microwave radiation emitted by the microwave reactor 5. To reduce the cost of energy consumption, the waste aqueous solution, after the adsorption process in the sorption column 4, is directed back to the heat exchanger 3. Recovered heat from the waste aqueous solution after the process, is used to preheat the new waste aqueous solution, containing Pt, Pd, Rh, Au, before it enters the sorption column 4. Further, the solution flows through the backpressure regulator 6. The use of the regulator is necessary due to the fact that the solution evaporates at elevated temperatures, so in the absence of the pressure regulator, uncontrolled boiling of the waste solution could occur. After passing through the backpressure regulator 6, the solution is collected in the output tank 7. All components of the system are connected to the central unit 8, where process parameters are controlled.

## Claims

1. A method of recovering Pt, Pd, Rh, Au from a highly diluted waste aqueous solution containing up to 100 mg/dm³ of the precious metals Pt, Pd, Rh, Au, in which the waste aqueous solution is passed through a bed of activated carbon, and the adsorbed precious metal ions are recovered from the surface of the activated carbon by known methods, in particular by burning the carbon or dissolving the precious metals with a mixture of strongly oxidizing acids, while the output solution remaining after the process is subjected to neutralization processes, **characterized in that** the waste aqueous solution at a temperature of 19-40°C, after establishing its pH>1, is introduced continuously at a rate of 0.5 - 50000 ml/min into an activated carbon bed placed in a sorption column, located inside a microwave reactor, and heated by microwave radiation until the solution temperature reaches 200-240°C, and the frequency of microwave radiation is 1-3000 GHz, while the power of the microwave reactor is 200-100000 W, and at the same time the pressure inside the column is continuously measured and maintained in the range of 4-50 bar, and the content of precious metals in the output solution remaining after the process is monitored.

2. The method, according to claim. 1, **characterized in that** the process is carried out until the activated carbon is completely saturated with precious metals.

3. The method according to claim 1, **characterized in that** the reaction of the waste aqueous solution pH= 7 is established.

4. The method, according to claim 1, **characterized in that** the frequency of microwave radiation is 2.45GHz.

5. A system for recovering Pt, Pd, Rh, Au from highly diluted waste aqueous solution, comprising an input tank of the waste aqueous solution, a high-pressure pump, an output container of the solution remaining after the process, and a central unit for collecting information on the process parameters and their regulation, **characterized in that** the input tank (1) is connected to a high-pressure pump (2), behind which is located the heat exchanger (3), which is connected on one side to the sorption column (4), in the form of a tube filled with a solid bed of activated carbon, located inside the microwave reactor (5), and on the other side to the backpressure regulator (6), behind which is located the output tank (7), while all components of the system are connected to the central unit (8), in which the process parameters are controlled.
